Europäisches Patentamt

European Patent Office

Office européen des brevets

(11) Publication number: **0 164 824 B1**

## EUROPEAN PATENT SPECIFICATION

(45) Date of publication of patent specification: **23.09.92**  (51) Int. Cl.5: **G01N 1/06**

(21) Application number: **85301935.4**

(22) Date of filing: **20.03.85**

(54) **Clamping mechanism for the cutter of a microtome.**

(30) Priority: **07.04.84 DE 3413278**

(43) Date of publication of application:
**18.12.85 Bulletin 85/51**

(45) Publication of the grant of the patent:
**23.09.92 Bulletin 92/39**

(84) Designated Contracting States:
**AT FR SE**

(56) References cited:
**EP-A- 0 158 484        EP-A- 0 159 155**
**DE-A- 2 143 529        FR-A- 2 529 678**
**GB-A- 1 307 974        US-A- 3 308 704**
**US-A- 3 540 335**

(73) Proprietor: **Leica Instruments GmbH**
**Heidelberger Strasse 17-19**
**W-6907 Nussloch b.Heidelberg(DE)**

(72) Inventor: **Berleth, Manfred, Ing. Grad.**
**Schulstrasse 34**
**W-6904 Eppelheim(DE)**

(74) Representative: **Diehl, Hermann Dr. et al**
**Diehl & Glaeser, Hiltl & Partner Flüggen-**
**strasse 13**
**W-8000 München 19(DE)**

# Description

This invention relates to a clamping mechanism for the cutter of a microtome in accordance with the preamble of claim 1.

A clamping mechanism of this type is disclosed in DE-A-2 143 529. A similar clamping mechanism is described in co-pending European Patent application EP 85 302 152.5.

With the clamping mechanisms in accordance with the state of the art the cutter mounting can be pivoted about an axis which is coincident with the cutting edge of the cutter and, in some cases, also about a further axis perpendicular to the axis mentioned before, and fixed in a certain angular position. Thus, it is possible to easily exchange one cutter for another and to readjust the cutting edge geometries in accordance to needs, dependent on the specimens required to be cut into thin sections and on the various types of cutters which include for example triangular glass cutters, Ralph glass cutters, standard microtome cutters, blade-shaped one-way cutters, hard metal blades and steel blades. The specimens to be cut into thin sections may include tissue fragments, bone fragments, plastic parts, metal parts and the like, embedded in plastic.

However, the known cutter mountings cannot be slid in a straight line in a direction perpendicular to the feeding direction of the cutter mounting. This latter possibility would be particularly important for the initial trimming of thin section specimens embedded in plastic.

It is therefore an object of the present invention to develop a clamping mechanism with which it is possible to do the initial trimming of thin section specimens embedded in plastic. This object is achieved by the features contained in the characterizing part of claim 1.

The clamping mechanism in accordance with the invention, can be both slid in a straight line and also angled. It is possible in a very simple manner, with such a clamping mechanism, to slide a cutter straight to one side and to rotate it through up to 45°, for example. It is also possible with this embodiment of the clamping mechanism to adjust a desired cutting angle of the cutter with extreme precision. Generally, a cutter which is tensioned in such a clamping mechanism, usually a triangular glass cutter, is adjustable in all three directions of space.

To enable these adjustments to be executed with high precision, the straight and the arcuate guide means may be dove-tail guides. The adjusting means may be a worn drive mounted in the body portion, and the cutter trough for clamping a triangular glass cutter may be provided with two mutually opposed clamping jaws and a clamping screw arranged perpendicularly to, and engaged with, the clamping jaws. The cutter can be adjusted laterally with extreme precision by such a worm drive. The cutter trough can also be adjusted to any desired angle with equal precision. This is particularly necessary for the initial trimming of a thin section specimen.

In another embodiment the cutter trough may also be constructed as an upward pointing wedge which includes a cutter mounting part with a recess near the one wedge surface and a clamping device on the second wedge surface, wherein the cutter is adjustable in at least in one direction relative to the body portion. In this manner a recess, which is particularly appropriate for mounting a bladeshaped cutter, can be formed in the body portion between the wedge surface carrying the adjustable clamping device and the second wedge surface of the body portion.

Blade-shaped cutters of this type include those known as one-way blades, which may consist of hard metal, of steel or of ceramics. This clamping mechanism, similarly to the various clamping mechanisms described above, may also advantageously be combined with a base and be pivoted relative to the base in order to adjust a desired cutting angle.

In the last-mentioned embodiment of the clamping mechanism, the clamping device may be adjustable in one direction by eccentric means, and in a direction perpendicular thereto by means of at least one screw. In this case the adjustment of the clamping device by the eccentric means takes place in the direction of the second wedge surface. It serves for tightening down or clamping fast a blade-shaped cutter between the cutter mounting part and the clamping device. On the other hand, the screw serves for adjusting the clamping device perpendicularly to the second wedge surface, that is to say it serves to adjust, or adapt to the thickness of a blade-shaped cutter, the gap formed between the recess in the cutter mounting part and the clamping device.

Further particulars, features and advantages will appear from the following description of examples of clamping devices according to the invention illustrated in the drawings, wherein:-

Figure 1 is a plan view of a clamping mechanism for a triangular glass cutter;

Figure 2 is a section along the line II-II in Figure 1;

Figure 3 is a plan view of a base for a clamping mechanism according to the invention; and

Figure 4 is a section along the line VIII-VIII in Figure 3.

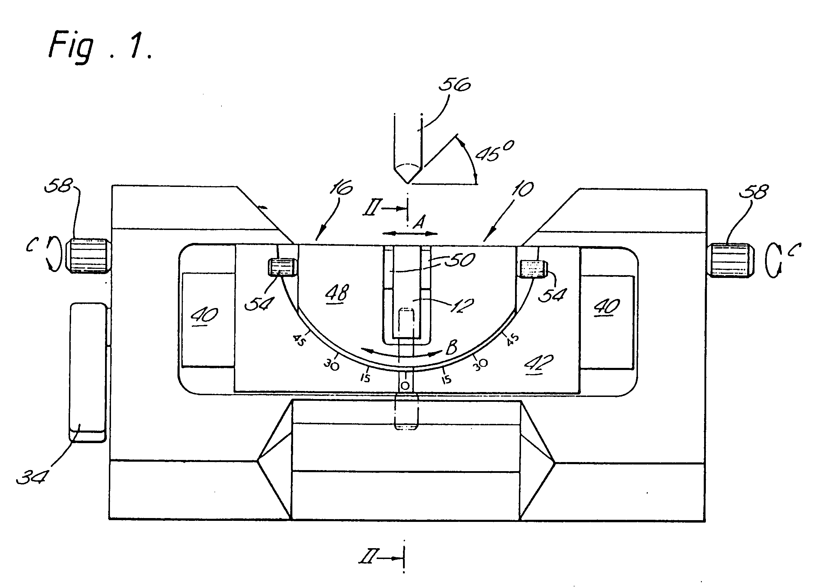

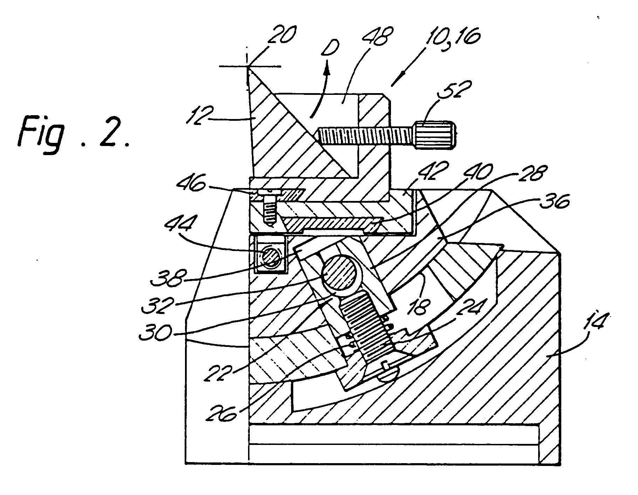

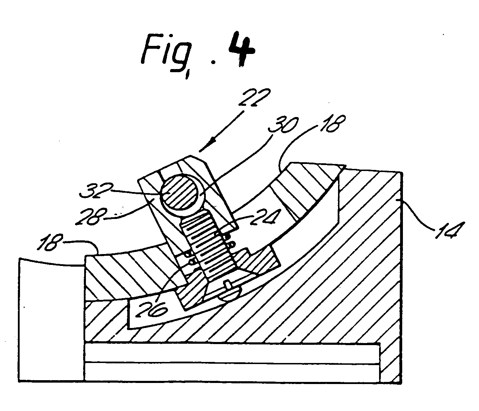

Figures 1 and 2 show a clamping mechanism 10 for a microtome cutter 12. The cutter is clampable in a cutter mounting 16 located on a base 14. The cutter mounting is mounted pivotably upon a uniformly curved sliding surface 18 formed in the base. The axis of rotation of the surface 18 is coincident with the cutting edge 20 of the cutter. In this manner the cutter mounting can be turned on the sliding surface in order to adjust to a desired cutting angle.

The base 14 is provided with at least one locking device 22 extending beyond the sliding surface 18 for clamping the cutter mounting 16 on the sliding surface. The locking device 22 comprises a tension piece 28 which is radially adjustable by means of a screw 24, is resiliently mounted by virtue of a coil spring 26, and has a transverse bore 30. An eccentric bar 32 is mounted in the cutter mounting 16 and extends through the bore and through at least one side of the cutting mounting 16, and is provided with an actuating member 34.

The cutter mounting 16 comprises a body portion 36 with a rear surface complementary to the sliding surface 18 in the base 14 and in which a recess 38 for the tension piece 28 is provided. The body portion 36 is provided with means remote from the rear surface for clamping the cutter 12.

The body portion 36 of the cutter mounting 16 has a flat surface on its side opposite the rear surface, and is provided with a straight guide means 40. An adjustable slide 42, slidable by adjusting means 44, is mounted on the straight guide means 40. The slide 42 carries, on its side opposite the guide means 40, an arcuate guide means 46 in which a cutter trough 48 is rotatably mounted. In this embodiment of the invention the straight and the arcuate guide means 40 and 46 are constructed as dovetail guides. The adjusting means 44 in this embodiment is a worm drive mounted in the body portion 36. The cutter trough 48 is provided with two opposed clamping jaws 50 and a clamping screw 52 arranged perpendicularly to and engaged with these clamping jaws for clamping a triangular glass cutter 12.

With a clamping mechanism 10 of this type, triangular glass cutters 12 with a thickness in the range between 6 mm and 12 mm can be clamped between the clamping jaws 50 by means of the clamping screws 52. The triangular glass cutter 12 is slidable laterally along the straight guide means 40, and can be angled, for example through 45° in each direction, around the second guide means 46, for the initial trimming of a thin section specimen embedded in plastics and designated by the reference numeral 56 in Figure 1. The straight lateral sliding is indicated by the double arrow A in Figure 1, and the angular movement to each side by the double arrow B. The slide 42 can be moved in the direction of the arrow A along the guide means 40 by the adjusting means 44, which comprises a screwthreaded spindle, by turning the rotary knobs 58 in the direction of the arrows C. Adjustment of the cutting angle, which is indicated by the arrow D in Figure 2, is made possible by the arcuate sliding surface 18 of the base 14.

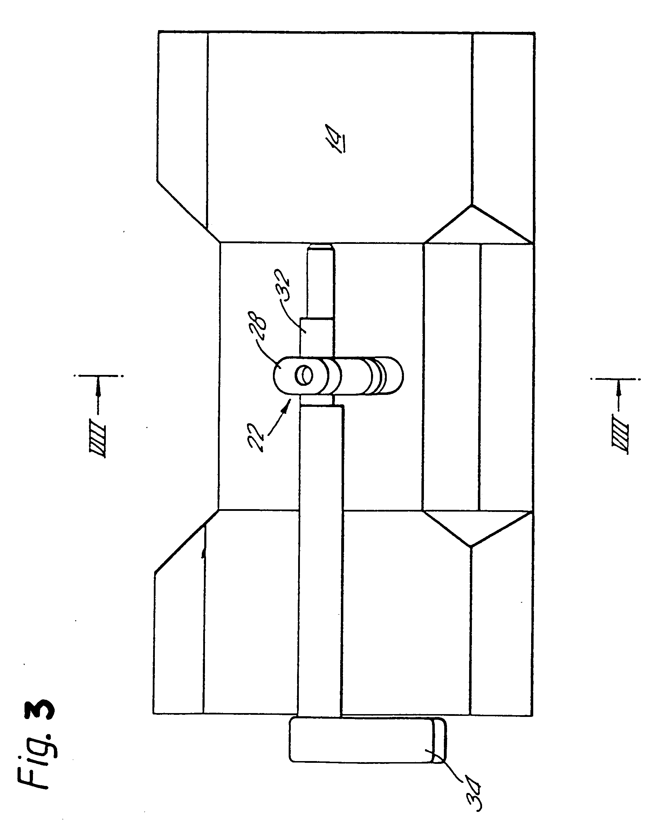

Figures 3 and 4 show a base 14 with a locking device 22 extending beyond the sliding surface 18, by which each of the cutter mountings 16 previously described and illustrated in the Figures 1 and 2 are clampable on the sliding surface of the base 14. The locking device 22 comprises a tension piece 28, which is radially adjustable by means of a screw 24 and resiliently mounted by means of the coil spring 26, with a transverse bore 30 through which an eccentric bar 32 extends. The bar is sufficiently long, at least on one side, that it extends over the base 14 and is connected at its end to an actuating member 34.

With a base 14 constructed in this manner, it is possible to clamp the various cutter mountings 16 extremely simply at any desired cutting angle on the base 14.

## Claims

1. A clamping mechanism for the cutter of a microtome, wherein

   a) the cutter (12) is clampable in a cutter mounting (16) located on a base (14), the cutter mounting (16) being mounted pivotably upon a uniformly curved sliding surface (18) formed in the base (14), and the axis of rotation of the mounting (16) being coincident with the cutting edge (20) of the cutter;

   b) the base (14) is provided with at least one locking means (22) for clamping the cutter mounting (16) on the sliding surface (18) of the base (14); and

   c) the cutter mounting (16) comprises a body portion (36) having a rear surface complementary to the sliding surface (18) in the base (14), the cutter mounting (16) being provided with means (52) remote from the rear surface of the body portion (36) for clamping the cutter (12);

   characterized in that

   d) the body portion (36) has a flat surface on its side opposite the rear surface and is provided with a straight guide means (40) carrying an adjustable slide (42,44) which carries on its side opposite the straight guide means (40) an arcuate guide means (46) in which a cutter trough (48) is rotatably mounted.

2. A clamping mechanism according to claim 1, wherein the straight and the arcuate guide means (40,46) comprise dovetail guides, the slide (42) is adjustable by means of a worm drive (44) mounted in the body portion (36), and the cutter trough (48) is provided with two mutually opposed clamping jaws (50) and a clamping screw (52) in engagement therewith for clamping a triangular glass cutter (12).

## Patentansprüche

1. Klemmvorrichtung für das Messer eines Mikrotoms, bei welcher

   a) das Messer (12) in einer in einem Grundteil (14) angeordneten Messeraufnahme (16) klemmbar ist, wobei die Messeraufnahme (16) drehbar in einer konstant gekrümmten Gleitfläche (18) gelagert ist, die in dem Grundteil (14) ausgebildet ist, und wobei die Drehachse der Aufnahme (16) mit der Schneide (20) des Messers zusammenfällt;

   b) das Grundteil (14) mit mindestens einer Arretiereinrichtung (22) zum Festklemmen der Messeraufnahme (16) auf der Gleitfläche (18) der Grundfläche (14) ausgestattet ist; und

   c) die Messeraufnahme (16) ein Basisteil (36) mit einer der Gleitfläche (18) der Grundfläche (14) entsprechenden Rückenfläche umfaßt, wobei die Messeraufnahme (16) mit einer von der Rückenfläche des Basisteils (36) abgewandt angeordneten Einrichtung (52) zum Klemmen des Messers (12) ausgestattet ist;

   **dadurch gekennzeichnet, da**ß

   d) das Basisteil (36) auf der der Rückenfläche gegenüberliegenden Seite abgeflacht und mit einer linearen Führungseinrichtung (40) versehen ist, die einen verstellbaren Schlitten (42,44) trägt, der auf seiner der linearen Führungseinrichtung (40) gegenüberliegenden Seite eine kreisbogenförmige Führungseinrichtung (46) trägt, in der eine Messerwanne (48) drehbar gelagert ist.

2. Klemmvorrichtung nach Anspruch 1, in welcher die lineare und die kreisbogenförmige Führungseinrichtung (40,46) Schwalbenschwanzführungen umfaßt, der Schlitten (42) mittels eines Spindeltriebes (44) verstellbar in dem Basisteil (36) gelagert ist, und daß die Messerwanne (48) mit zwei einander gegenüberliegenden Klemmbacken (50) und einer damit in Eingriff stehenden Klemmschraube (52) zum Klemmen eines Dreieck-Glasmessers (12) ausgestattet ist.

## Revendications

1. Mécanisme de serrage du couteau d'un microtome dans lequel

   a) le couteau (12) est serrable dans une monture (16) de couteau disposée sur un socle (14), la monture (16) de couteau étant montée pivotante sur une surface (18) de coulissement uniformément courbe ménagée dans le socle (14), et l'axe de rotation de la monture (16) coïncidant avec l'arête de coupe (20) du couteau ;

   (b) le socle (14) est pourvu d'au moins un moyen de verrouillage (22) pour serrer la monture (16) de couteau sur la surface de coulissement (18) du socle 14 ; et

   (c) la monture de couteau (16) est constituée d'une partie formant corps (36) ayant une surface arrière complémentaire à la surface de coulissement (18) ménagée dans le socle (14), la monture (16) de couteau étant pourvue de moyens (52) à l'écart de la surface arrière de la partie formant corps (36) pour serrer le couteau (12) ;

   caractérisé en ce que

   (d) la partie formant corps (36) a une surface plate sur son côté opposé à la surface arrière et elle est pourvue d'un moyen de guidage rectiligne (40) portant un chariot réglable (42,44) qui porte, sur sa face opposée au moyen de guidage rectiligne (40), un moyen de guidage arqué (46) dans lequel est monté rotatif un berceau (48) pour le couteau.

2. Mécanisme de serrage selon la revendication 1, dans lequel les moyens de guidage rectiligne et arqué (40,46) sont constitués de guides en queue d'aronde, le chariot (42) est réglable au moyen d'un entraînement à vis sans fin (44) montée dans la partie formant corps (36), et le berceau (48) de couteau est pourvu de deux mâchoires de serrage (50) mutuellement opposées et d'une vis de serrage (52) en prise avec celles-ci pour serrer un couteau de verre triangulaire (12).

Fig. 1.

Fig . 2.

Fig . 4

# Fig. 3

EP 0 164 824 B1